# EUROPEAN PATENT APPLICATION

(11) **EP 1 270 388 A2**
(43) Date of publication of application: **02.01.2003**
(21) Application number: 02380133.5
(22) Date of filing: 25.06.2002
(51) Int. Cl.: B62H 3/04

(54) **Support for parking bicycles**

(30) Priority: 25.06.2001 ES 200101965 U
(71) Applicant: Ruiz De Gauna Lopez de Luzuriaga, Andrés, 01003 Vitoria-Gasteiz (Alava) (ES)
(72) Inventor: Ruiz De Gauna Lopez de Luzuriaga, Andrés, 01003 Vitoria-Gasteiz (Alava) (ES)
(74) Representative: Davila Baz, Angel

(57) **Abstract**

A SUPPORT FOR PARKING BICYCLES, which is characterized by the fact that it consists of a stability base (1), made in the shape of a rectangle which has some support feet (3) on one of its sides which serve for anchoring to the ground, while on the opposite side, a fork (2) in the shape of an inverted U has been intercalated which, on its lower part, provides two additional supports and which allows, on each foot, the lateral support of a bicycle, thus achieving perfect stability thereof in its position, and by the fact that on the upper part of the fork, a plate (5) has been placed which allows for advertising.

## Description

### OBJECT OF THE INVENTION

The present invention, as set forth in the statement of the specification, refers to a support for bicycles, designed and made to obtain significant advantages with respect to other existing ones for similar purposes.

The said support allows for the parking in battery of two units, expandable by modules, constituted so that it allows for suitable stability of the parked bicycle on the support and serves as an advertising base.

The support of the invention consists of a structure of simple design and easy installation. Basically, it consists of a stability base made of a curved steel tube in the shape of a rectangle, on which one of the bicycle wheels will be supported and on which, on one of its sides, two feet have been integrated, also of steel tube, that allow for anchoring to the ground. These feet also serve the function of preventing the displacement of the wheel laterally, improving the stability of the bicycle on the support. On the opposite side, a fork in the shape of an inverted U has been intercalated, also of steel tube and soldered, which, in addition to serving for the lateral support of the bicycle, achieving perfect stability, allows for utilizing the lower ends for anchoring to the ground.

An advertising plate is made provided on the upper part of the fork.

### BACKGROUND OF THE INVENTION

Various support models are known for parking bicycles, the base generally being constructed so that the bicycles are aligned well on a level or on two levels, but some do not guarantee the stability of the bicycle, others can damage some of its components and there are some in which handlebars and pedals of bicycles placed in correlating positions are intermingled.

### DESCRIPTION OF THE INVENTION

In accordance with the present invention, the support consists of two parts, one which we will call the stability base and the other the support column.

The base is made of a curved steel tube, forming a rectangle, with one of its sides incomplete. This configuration allows two bicycles to be parked, guaranteeing their stability, without either of them impeding the placement or removal of the other, using the least amount of space possible for this.

The support column is a fork in the shape of an inverted U, made of a steel tube that is intercalated on one side of the base by means of a soldered joint, on which the bicycle is supported laterally, improving its stability. The contact zone of the bicycle with the fork is provided, in proximity, with a crossbar soldered thereon, on which an advertising plate can be installed.

Affixing it to the ground is possible by means of two feet integrated on the side opposite the support column, that are installed, as well as the latter, by soldered disks, and in which some drill holes have been made to affix them with plugs. Logically, both the feet and the column can be driven into the ground.

In order to complement the description that will be given below and in order to aid in better comprehension of the features of the invention, some drawings accompany the present specification, which will aid in better understanding the advantages of the support forming the object of the invention.

### BRIEF DESCRIPTION OF THE DRAWINGS

Figure 1 shows a perspective view of the support made in accordance with the invention.

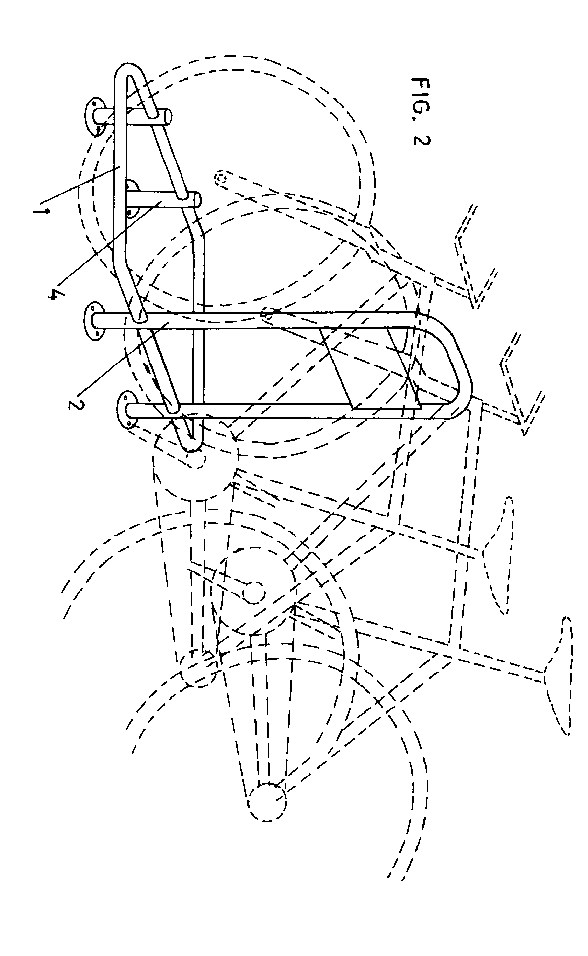

Figure 2 shows a perspective view of the support made in accordance with the invention, in which it can be seen how two bicycles are parked.

### DESCRIPTION OF A PREFERRED EMBODIMENT

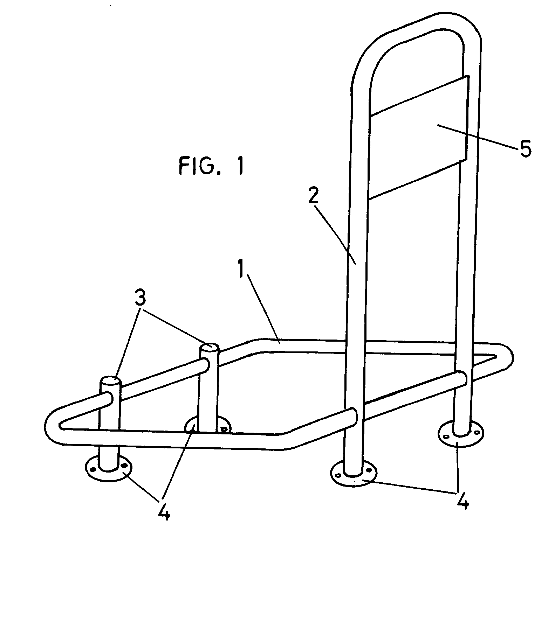

The support shown in Figure 1 consists of a stability base 1 made of a curved steel tube forming a rectangle. Making the base in the shape of a rectangle allows for two bicycles to be parked so that their components, wheels, handlebars, pedals, etc. are not aligned, so that their separation can be reduced as much as possible, thus better using the space. On one of the sides, two tubes 3, also of steel, have been integrated, of a greater diameter, which we will call anchoring feet, and which guarantee their position perpendicular to the base by means of soldering thereto. These tubes, in addition to serving for anchoring to the floor, prevent the lateral displacement of the wheel, since they protrude a few centimeters from the base on the side opposite the anchor, improving the stability of the bicycle.

On the incomplete side of the base, a fork 2, which is in the shape of an inverted U, has been intercalated, which is joined with the base and perpendicular to it. Each foot of the fork serves as a support column for each of the parked bicycles. The plate 5, soldered on the upper part of the fork, allows for advertising to be installed.

Both the anchoring feet 3, as well as each of the ends of the fork 2 are provided, at their ends, with steel disks attached by soldering, in which some drill holes have been made in order to be able to attach the support to the ground. In case it is deemed advisable, both the anchoring feet 3 as well as the fork 2 can be driven into the ground.

## Claims

1. SUPPORT FOR PARKING BICYCLES, **characterized by** the fact that it consists of a stability base (1), made in the shape of a rectangle which has some support feet (3) on one of its sides which serve for anchoring to the ground, while on the opposite side, a fork (2) in the shape of an inverted U has been intercalated which, on its lower part, provides two additional supports and which allows, on each foot, the lateral support of a bicycle, thus achieving perfect stability thereof in its position, and by the fact that on the upper part of the fork, a plate (5) has been placed which allows for advertising.

2. A support as per claim 1, **characterized by** the fact that the support feet (3) are provided with means (4) to allow for anchoring the support to the ground.
